# EUROPÄISCHE PATENTSCHRIFT

(11) **EP 1 713 656 B1**
(45) Veröffentlichungstag und Bekanntmachung des Hinweises auf die Patenterteilung: **27.05.2009**
(21) Anmeldenummer: 05714941.1
(22) Anmeldetag: 04.02.2005
(51) Int. Cl.: B60K 11/04, B60K 11/08, F01P 3/18, F01P 11/10

(54) **KÜHLERANORDNUNG FÜR EIN KRAFTFAHRZEUG**
COOLING ARRANGEMENT FOR MOTOR VEHICLE
SYSTEME RADIATEUR D'UN VEHICULE AUTOMOBILE

(30) Priorität: 04.02.2004 DE 102004005592
(43) Veröffentlichungstag der Anmeldung: 25.10.2006
(73) Patentinhaber: GM Global Technology Operations, Inc., Detroit, MI 48265-3000 (US)
(72) Erfinder: LEOPOLD, Frank, 65232 Taunusstein-Orlen (DE); LUNGERSHAUSEN, Dirk, Rainer, 65207 Wiesbaden (DE); VERHEE, Patrick, S-411 08 Göteborg (SE)
(74) Vertreter: Strauss, Peter
(86) Internationale Anmeldenummer: PCT/DE2005/000190
(87) Internationale Veröffentlichungsnummer: WO 2005/075236

(56) Entgegenhaltungen:
- WO-A-02/070289
- DE-A1- 2 539 155
- DE-A1- 3 214 588
- DE-B- 1 143 676
- DE-U1- 29 607 551
- GB-A- 1 488 257
- US-A- 2 250 795
- US-A1- 2005 029 027

## Beschreibung

Die vorliegende Erfindung betrifft ein Kraftfahrzeug mit einem Motor und einem Kühler zum Kühlen des Motors, die in einem nach oben von einer Haube begrenzten Motorraum untergebracht sind, und mit einem Gebläse zum Antreiben eines Kühlluftstroms durch ein den Kühler aufnehmendes Gehäuse, bei dem der Kühlluftstrom zwischen einem über das Gebläse führenden Weg und einem Ausweichweg umschaltbar ist. Ein solches Fahrzeug ist aus GB 1 488 257 bekannt.

Bei diesem bekannten Fahrzeug ist das Kühlergehäuse in einer vorderen unteren Ecke des Motorraums angeordnet. Der Bereich des Motorraums oberhalb des Kühlergehäuses und unterhalb der Haube ist aufgrund seiner geringen Höhe schwierig zu nutzen, so dass der Motorraum im Vergleich zu einer üblichen Anordnung mit zwischen Kühlergrill und Motor angeordnetem Kühler eher lang bemessen werden muss.

Bei einem aus DE-AS 1 143 676 bekannten Kraftmaschinensatz zur Aufstellung im Freien ist ein Wärmetauscher zwischen Motor und Haube angeordnet, und die Haube begrenzt einen Strömungsweg für durch den Wärmetauscher fließende Kühlluft.

Aus WO 02/070289 A2 ist ein Amphibienfahrzeug bekannt, bei dem ein Kühler heckseitig in einer vom Motorraum abgetrennten Kammer oberhalb des Motors untergebracht ist. Diese Kammer ist nach oben offen.

Bei der Konstruktion einer Kraftfahrzeugkarosserie ist man stets bemüht, den Anteil des Motorraums an der Gesamtlänge möglichst gering zu halten, damit ein großer Anteil der Fahrzeuglänge für die Fahrgastzelle oder für Laderaum zur Verfügung steht. Gleichzeitig müssen Sicherheitsanforderungen für den Fall eines Aufpralls oder Zusammenstoßes erfüllt werden, was im Allgemeinen um so schwieriger ist, je kürzer die Entfernung zwischen dem vorderen Stoßfänger und der Fahrgastzelle des Fahrzeugs ist. Extrem kurze Bauformen wurden bislang im Wesentlichen durch spezielle Ausrichtungen des Motors im Motorraum realisiert, was allerdings zu erheblichen Kosten führte, da für die Kraftübertragung aufs Fahrwerk spezielle, aufwändigere Getriebe erforderlich wurden und für die Aufhängung des Motors eine Vielzahl von für eine solche Aufhängung spezifischen und daher vergleichsweise kostspieligen Bauteilen benötigt wurde.

Um neue gesetzliche Anforderungen hinsichtlich des Schutzes von Fußgängern bei einem Zusammenstoß mit einem Kraftfahrzeug zu erfüllen, ist man in letzter Zeit dazu übergegangen, den Zwischenraum zwischen Motor und Motorraumhaube eines Kraftfahrzeugs zu vergrößern, so dass beim Aufschlagen eines Fußgängers auf die Motorraumhaube ein größerer Verformungsweg als bislang zur Verfügung steht, auf dem der Körper, insbesondere der Kopf des Fußgängers abgebremst werden kann, bevor Motorhaube und Motor einander berühren und eine weitere Verformung nicht mehr möglich ist. Diese Höherlegung der Motorhaube macht den Motorraum sehr voluminös und lässt dadurch die Frontpartie einer Fahrzeugkarosserie leicht überdimensioniert erscheinen, was den Fahrzeugen einen bulligen Gesamteindruck verleiht, der von vielen Verbrauchern als unangenehm empfunden wird.

Ein Ziel der vorliegenden Erfindung ist, ein Kraftfahrzeug der eingangs angegebenen Art so weiterzubilden, dass dessen Karosserie hohen Sicherheitsanforderungen genügt und dabei den Eindruck einer überdimensionierten Frontpartie vermeidet.

Eine weitere Aufgabe ist, ein Fahrzeug zu schaffen, das es erlaubt, den Motorraum ungewöhnlich kurz zu machen, ohne dass hierfür aufwändige und kostspielige Anpassungen der Motoraufhängung bzw. des Getriebes erforderlich werden.

Die Aufgaben werden gelöst durch ein Kraftfahrzeug mit den Merkmalen des Anspruchs 1.

Indem der plattenförmige Kühler im wesentlichen parallel zur Haube angeordnet und wenigstens zum Teil in einem Zwischenraum oberhalb des Motors und unterhalb der Haube untergebracht wird, kann die Länge des Motorraums des Fahrzeugs im Vergleich zu einer herkömmlichen Konstruktion mit in Fahrtrichtung vor dem Motor angeordnetem Kühler um die Ausdehnung des Kühlers verringert werden.

Das Gehäuse des Kühlers schafft beim erfindungsgemäßen Kraftfahrzeug einen als Aufprallschutz für einen Fußgänger benötigten Zwischenraum zwischen Haube und Motor. Auch der Kühler selbst bildet im Notfall eine zusätzliche Verformungszone zwischen Haube und Motor, die den Schutz des Fußgängers weiter verbessert. Das Volumen des Motorraums wird auf diese Weise sehr effizient genutzt.

Um Umlenkungen des Luftstroms durch den Kühler möglichst gering zu halten und so den Strömungswiderstand des Kühlers zu begrenzen, sind Strömungskanäle des Kühlers vorzugsweise schräg zu einer stromaufwärtigen oder stromabwärtigen Oberfläche des Kühlers ausgerichtet.

Vorzugsweise unterteilt der Kühler das Innere des Gehäuses in einen unteren, dem Motor benachbarten, und einen oberen, der Haube benachbarten Teilraum. Bei einem leichten Aufprall kann der Verformungswiderstand der Haube allein ausreichend sein, um den Körper eines Fußgängers zu stoppen, bevor der obere Teilraum kollabiert ist und die Haube den Kühler berührt. Bei einem stärkeren Aufprall wird nach dem Kollabieren des oberen Teilraums der Kühler zunächst in den unteren Teilraum hineingedrückt, wenn er den Motor berührt, eventuell sogar noch in sich gestaucht. Anstatt nach einem vollständigen Kollaps der Motorhaube unmittelbar auf den Motor aufzuschlagen, was in der Regel schwerste Verletzungen zur Folge hat, wird der Fußgänger beim erfindungsgemäßen Fahrzeug vor einem solchen Aufschlag schrittweise immer stärker abgebremst und so geschützt.

Vorzugsweise ist der Teilraum ein stromaufwärtiger Teilraum, in welchen Fahrtwind von vorne ohne wesentliche Abschattung durch die Haube eindringen kann, während der obere Teilraum, der im Windschatten der Haube liegen kann, den stromabwärtigen Teilraum bildet.

Das Gebläse mit hohem Durchlassquerschnitt ist am Einfachsten jeweils seitlich gegen das den Kühler aufnehmende Gehäuse und den Motor versetzt unterzubringen. Es kann sowohl als Druckgebläse arbeiten und an den stromaufwärtigen Teilraum angeschlossen sein als auch als Sauggebläse arbeiten und an den stromabwärtigen Teilraum angeschlossen sein.

Wenn das Gebläse als Sauggebläse an den stromabwärtigen Teilraum angeschlossen ist, ist der Ausweichweg besonders einfach mit Hilfe wenigstens eines Ventils realisierbar, das zwischen dem stromabwärtigen Teilraum und der Umgebung des Gehäuses vorgesehen ist, um einen Überdruck aus dem stromabwärtigen Teilraum unter Umgehung des Gebläses abzulassen. Ein solcher Überdruck entsteht, wenn bei zügiger Bewegung des Fahrzeugs der Fahrtwind einen hohen Staudruck in dem stromaufwärtigen Teilraum erzeugt.

Ein Strömungsweg für durch das Ventil hindurchgetretene Luft ist vorzugsweise am Fuß einer Windschutzscheibe des Fahrzeugs in Freie geführt, so dass warme Abluft über die Windschutzscheibe außen hinweg streicht und bei kalter, feuchter Witterung dazu beiträgt, eine Vereisung der Scheibe zu vermeiden.

Die oben getroffene Unterscheidung zwischen einem stromaufwärtigen und einem stromabwärtigen Teilraum setzt voraus, dass die Durchströmungsrichtung des Kühlers eindeutig festliegt. Dies ist jedoch nicht zwangläufig der Fall. Die Durchströmungsrichtungen können im Betrieb mit und ohne Gebläse entgegengesetzt sein.

Ein Kühler für eine Fahrzeugklimaanlage und/oder ein Ladeluftkühler, die von Kühlleistung und Abmessungen her in der Regel deutlich kleiner als der Motorkühler sind, können vor den Motor angeordnet sein.

Von diesen zwei Kühlern ist vorzugsweise wenigstens einer entweder oberhalb oder unterhalb eines Verformungsbereichs eines vorderen Stoßfängerquerträgers angeordnet, so dass er bei einem leichten Zusammenstoß durch eine Verformung des Querträgers nicht in Mitleidenschaft gezogen wird.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: eine perspektivische Ansicht eines erfindungsgemäßen Kraftfahrzeugs;
- Fig. 2: einen schematischen Schnitt durch den Motorraum des Kraftfahrzeugs in einer zur Fahrtrichtung parallelen Ebene;
- Fig. 3: einen schematischen Schnitt durch den Frontbereich des Fahrzeugs in einer zur Fahrtrichtung senkrechten Ebene;
- Fig. 4: einen zur Darstellung der Fig. 2 analogen Schnitt durch den Motorraum gemäß einer abgewandelten Ausgestaltung des Fahrzeugs, in einem ersten Betriebszustand;
- Fig. 5: einen zu Fig. 4 analogen Schnitt durch das gleiche Fahrzeug in einem zweiten Betriebszustand; und
- Fig. 6: einen Schnitt senkrecht zur Fahrtrichtung durch eine weitere Ausgestaltung des erfindungsgemäßen Fahrzeugs.

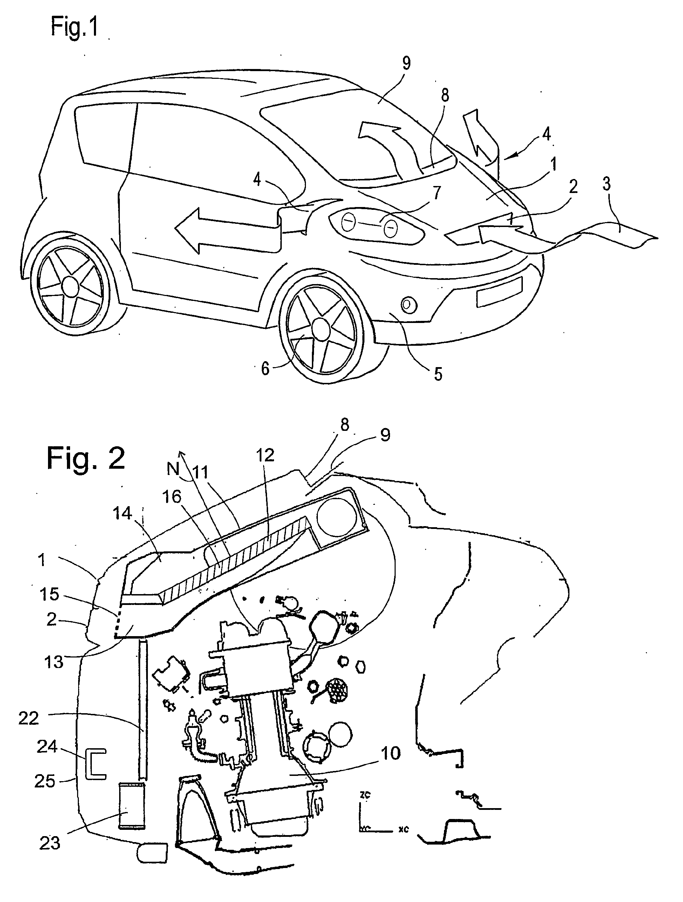

Fig. 1 zeigt als ein bevorzugtes Ausführungsbeispiel der vorliegenden Erfindung einen zweitürigen Kleinwagen, doch versteht sich, dass die Erfindung allgemein auf beliebige Fahrzeuge mit kurzer und vergleichsweise hoch gelegener Motorhaube 1 anwendbar ist. Eine Einlassöffnung 2 für einen Kühlluftstrom, in der Figur symbolisiert als breiter Pfeil 3, ist unter der Vorderkante der Motorhaube 1 vorgesehen. Erste Auslassöffnungen 4 für den Kühlluftstrom nach dem Durchgang durch den Motorraum sind in den vorderen Kotflügeln 5 jeweils oberhalb eines Rades 6 und hinter einer Scheinwerfereinheit 7 gebildet. Eine zweite Auslassöffnung 8 befindet sich am Fuß einer Windschutzscheibe 9, im Anschluss an die Hinterkante der Motorhaube 1.

Fig. 2 zeigt einen schematischen Schnitt durch die Frontpartie des Fahrzeugs aus Fig. 1. Aufbau und Anordnung des Motors 10 sind an sich bekannt und werden hier nicht genauer beschrieben. In einem Zwischenraum oberhalb des Motors 10 und unterhalb der Motorhaube 1 ist ein Gehäuse 11 angeordnet, in dem ein von Kühlwasser des Motors 10 durchströmter Kühler 12 untergebracht ist. Der im Wesentlichen parallel zur Haube 1 ausgerichtete Kühler 12 unterteilt das Gehäuse 11 in einen unteren Teilraum 13 und einen oberen Teilraum 14. Eine Kühlluft-Einlassöffnung 15 des Gehäuses 11 ist unmittelbar hinter der Einlassöffnung 2 der Karosserie angeordnet, so dass Frischluft, die sich bei fahrendem Fahrzeug vor dessen Frontpartie staut, effizient in den unteren Teilraum 13 geführt wird. Diese Frischluft strömt zwischen Lamellen 16 des Kühlers 12 hindurch in den oberen Teilraum 14. Um den Strömungswiderstand des Kühlers 12 gering zu halten, sind die Lamellen 16 in Bezug auf die Oberflächennormale N des Kühlers 12 schräg gestellt, so dass die Strömungsrichtung der Luft beim Übergang vom unteren in den oberen Teilraum nur wenig verändert wird.

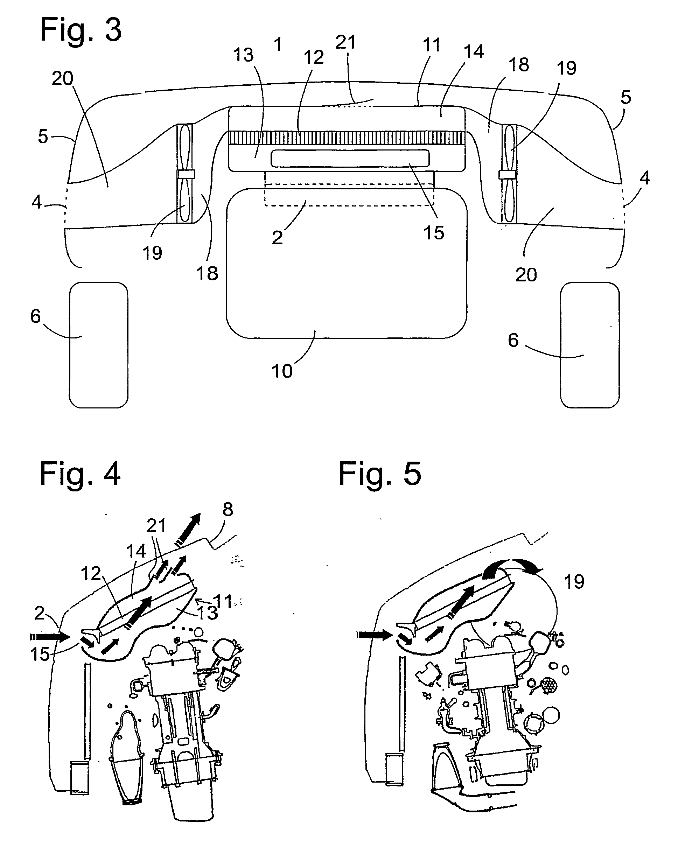

Der obere Teilraum 14 ist bei dieser Ausgestaltung über den hinteren Rand des Kühlers 12 durch einen Querkanal 17 verlängert, der die gesamte Höhe des Gehäuses 11 einnimmt und von dessen zwei Stirnseiten jeweils ein Saugstutzen 18 mit großem Querschnitt zu einem Gebläse 19 führt. Wie insbesondere aus der Darstellung der Fig. 3 zu erkennen, sind die zwei Gebläse 19 im Motorraum jeweils seitlich vom Gehäuse 11 und dem Motor 10 angeordnet, so dass ihr Durchmesser deutlich größer gemacht werden kann als die Breite des Zwischenraums zwischen Motor 10 und Haube 1, in welchem das Gehäuse 11 untergebracht ist. Die Gebläse 19 sind betreibbar, um Luft aus dem oberen Teilraum 14 abzusaugen und über Kanäle 20 (siehe Fig. 3) an den Auslassöffnungen 4 der Karosserie wieder auszustoßen.

An der Oberseite des Gehäuses 11 sind ein oder mehrere Ventile 21 mit großem Durchgangsquerschnitt angeordnet, die bewegliche Klappen aufweisen, die vom Luftdruck im oberen Teilraum 14 angehoben werden und Luft aus dem oberen Teilraum 14 in einen Zwischenraum zwischen Gehäuse 11 und Motorhaube 1 austreten und schließlich durch die Auslassöffnung 8 entweichen lassen, wenn der Druck in diesem Zwischenraum niedriger ist als in dem oberen Teilraum 14.

Eine (nicht dargestellte) Steuerschaltung steuert den Betrieb der Gebläse 19 anhand der von einem Sensor gemessenen Kühlwassertemperatur des Motors 10. Wenn diese einen kritischen Wert überschreitet, was insbesondere bei langsamem Stadtverkehr mit vielen Brems- und Beschleunigungsphasen der Fall ist, schaltet die Steuerschaltung die Gebläse 19 ein, so dass ein intensiver Kühlluftstrom durch die Einlassöffnung 2 eingesogen wird, den Kühler 12 von unten nach oben durchläuft und an den Auslassöffnungen 4 wieder ausgestoßen wird. Wenn die Gebläse 19 in Betrieb sind, herrscht in dem oberen Teilraum 14 ein niedrigerer Druck als in dem Zwischenraum zwischen Gehäuse 11 und Haube 1. Dadurch werden die Klappen der Ventile 21 gegen ihren Sitz gedrückt, und die Ventile 21 werden geschlossen gehalten, so dass die von den Gebläsen 19 angesaugte Luft vollständig den Kühler 12 durchströmen muss. Wenn die gemessene Temperatur unter diesem kritischen Wert liegt, bleiben die Gebläse 19 ausgeschaltet. Dies ist insbesondere bei zügiger Fahrt der Fall; in diesem Fall ist der Staudruck der Kühlluft, die vom Fahrtwind in das Gehäuse 11 hineingedrückt wird, groß genug, um die Ventile 21 zu öffnen, so dass die Kühlluft unter Umgehung der Gebläse 19 - die im Stand einen erheblichen Strömungswiderstand darstellen - an der zweiten Auslassöffnung 8 ausströmt.

Ein zweiter Kühler 22 ist in Fig. 2 in Fahrtrichtung vor dem Motor 10 dargestellt. Dieser Kühler 22 ist einer Klimaanlage des Fahrzeugs zugeordnet. Seine Leistung ist deutlich geringer als die des Motorkühlers 12 und dementsprechend sind auch seine Abmessungen geringer, so dass die gesamte Frontpartie des Fahrzeugs kürzer gebaut werden kann, als wenn an dieser Stelle ein Motorkühler vorgesehen wäre. Wenn dem Motor 10 ein (nicht dargestellter) Lader zugeordnet ist, so kann unterhalb des Klimaanlagenkühlers 22 noch ein Ladeluftkühler 23 vorgesehen werden.

Der Ladeluftkühler 23 ist unterhalb eines Querträgers 24 angeordnet, an welchem der vordere Stoßfänger 25 des Fahrzeugs aufgehängt ist. So wird der Ladeluftkühler 23 nicht in Mitleidenschaft gezogen, wenn bei einem leichten Zusammenstoß der Querträger 24 nach innen verbogen wird.

Die Fig. 4 und 5 zeigen Schnitte durch eine Frontpartie eines Kraftfahrzeugs gemäß einer geringfügig abgewandelten Ausgestaltung der Erfindung. Fig. 4 veranschaulicht den Betriebszustand bei niedriger Motortemperatur. Ein Kühlluftstrom, der durch die Einlassöffnungen 2, 15 in das Kühlergehäuse 11 eintritt, durchquert den Kühler 12, verlässt den oberen Teilraum 14 des Gehäuses 11 durch zwei Ventilklappen 21 und tritt an der zweiten Auslassöffnung 8 wieder aus. Im Fall der Fig. 5 sind die Gebläse 19 in Betrieb und erzeugen einen Unterdruck in dem oberen Teilraum 14, der die Ventilklappen 21 geschlossen hält. Der Kühlluftstrom verläuft vom oberen Teilraum 14 durch die Gebläse 19 zu den ersten Auslassöffnungen 4. Die Ausgestaltung der Fig. 4 und 5 zeichnet sich aus durch eine Einbuchtung 26 an der Unterseite des Gehäuses 11, die den unteren Teilraum 13 einen Querschnitt ähnlich einer Venturi-Düse verleiht und für eine gleichmäßige Verteilung des Kühlluftstroms auf den Querschnitt des Kühlers 12 sorgt. Die Einbuchtung 26 ist oberhalb des Zylinderkopfblocks angeordnet, der den höchstgelegenen Teil des Motors 10 bildet. Diese platzsparende Anordnung ermöglicht einen großen Durchgangsquerschnitt und damit einen geringen Strömungswiderstand des Gehäuses 11.

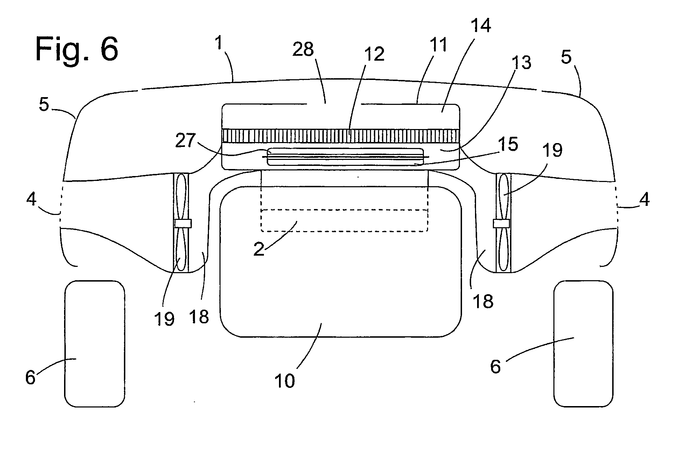

Eine weitere Ausgestaltung des erfindungsgemäßen Fahrzeugs ist in Fig. 6 in einem Schnitt quer zur Fahrtrichtung entsprechend der Darstellung der Fig. 3 gezeigt. Anordnung und Gestalt des Kühlergehäuses 11 ist die gleiche wie bei den Ausgestaltungen der Fig. 1 bis 3 oder 4 und 5. Im Unterschied zu diesen Ausgestaltungen ist hier jedoch in der Einlassöffnung 15 des Kühlergehäuses 11 eine verschließbare Einlassklappe 27, hier schematisch als Schmetterlingsklappe dargestellt, vorgesehen, die der Kontrolle durch die Steuerschaltung untersteht, und die Saugstutzen 18 der Gebläse 19 sind an den unteren Teilraum 13 angeschlossen. Anstelle eines Ventils 21 findet sich an der Oberseite des oberen Teilraums 14 eine einfache Öffnung 28.

So lange die Kühlwassertemperatur unter dem kritischen Wert ist, hält die Steuerschaltung die Einlassklappe 27 geöffnet, und Kühlluft strömt über die Einlassöffnung 2 ein und die zweite Auslassöffnung 8 aus, wie oben beschrieben.

Wenn die Steuerschaltung feststellt, dass der kritische Wert der Kühlwassertemperatur überschritten ist, schließt sie die Einlassklappe 27 und setzt die Gebläse 19 in Gang. Dadurch kehrt sich die Strömungsrichtung im Gehäuse 11 um: Frischluft wird über die zweite Auslassöffnung 8 angesaugt und erreicht den oberen Teilraum durch die Öffnung 28, strömt durch den Kühler 12 und wird von den Gebläsen 19 an den ersten Auslassöffnungen 4 wieder ausgestoßen.

Diese Ausgestaltung vermeidet einen Druckabfall an den Ventilen 21, ist jedoch aufwändiger als die zuvor beschriebenen, weil die gesteuerte Einlassklappe 27 erforderlich ist.

### Bezugszeichenliste

- Motorhaube: 1
- Einlassöffnung: 2
- Pfeil: 3
- Auslassöffnung: 4
- Kotflügel: 5
- Rad: 6
- Scheinwerfereinheit: 7
- Bremspedal: 8
- Windschutzscheibe: 9
- Motor: 10
- Gehäuse: 11
- Kühler: 12
- Unterer Teilraum: 13
- Oberer Teilraum: 14
- Einlassöffnung: 15
- Lamellen: 16
- Querkanal: 17
- Saugstutzen: 18
- Gebläse: 19
- Kanäle: 20
- Ventil: 21
- Kühler: 22
- Ladeluftkühler: 23
- Querträger: 24
- Stoßfänger: 25
- Einbuchtung: 26
- Einlassklappe: 27
- Öffnung: 28

## Patentansprüche

1. Kraftfahrzeug mit einem Motor (10) und einem Kühler (12) zum Kühlen des Motors (10), die in einem nach oben von einer Haube (1) begrenzten frontseitigen Motorraum untergebracht sind, und mit einem Gebläse (19) zum Antreiben eines Kühlluftstroms durch ein den Kühler (12) aufnehmendes Gehäuse (11), bei dem der Kühlluftstrom zwischen einem über das Gebläse (19) führenden Weg und einem Ausweichweg umschaltbar ist, **dadurch gekennzeichnet, dass** der eine im Wesentlichen plattenförmige äußere Gestalt aufweisende Kühler (12) in etwa parallel zur Haube (1) ausgerichtet ist und sich wenigstens zum Teil in einem Zwischenraum oberhalb des Motors (10) und unterhalb der Haube (1) erstreckt.

2. Kraftfahrzeug nach Anspruch 1, **dadurch gekennzeichnet, dass** Lamellen (16) des Kühlers (12) schräg zu einer stromaufwärtigen oder stromabwärtigen Oberfläche des Kühlers (12) ausgerichtet sind.

3. Kraftfahrzeug nach einem der vorhergehenden Ansprüche, **dadurch gekennzeichnet, dass** das Gebläse (19) seitlich gegen das Gehäuse (11) und den Motor (10) versetzt angeordnet ist.

4. Kraftfahrzeug nach einem der vorhergehenden Ansprüche, **dadurch gekennzeichnet, dass** der Kühler (12) das Innere des Gehäuses (11) in einen unteren Teilraum (13) und einen oberen Teilraum (14) unterteilt.

5. Kraftfahrzeug nach einem der vorhergehenden Ansprüche, **dadurch gekennzeichnet, dass** das Gebläse (19) an den unteren Teilraum (13) angeschlossen ist.

6. Kraftfahrzeug nach einem der vorhergehenden Ansprüche, **dadurch gekennzeichnet, dass** das Gebläse (19) an den oberen Teilraum (14) angeschlossen ist.

7. Kraftfahrzeug nach einem der vorhergehenden Ansprüche, **dadurch gekennzeichnet, dass** der Kühlluftstrom auf dem Ausweichweg von dem beim bewegten Fahrzeug mit Fahrtwind beaufschlagten unteren Teilraum (13) in den oberen Teilraum (14) verläuft.

8. Kraftfahrzeug nach Anspruch 7, **dadurch gekennzeichnet, dass** der Kühlluftstrom auf dem durch das Gebläse (19) führenden Weg das Gehäuse (11) in Richtung vom oberen zum unteren Teilraum (13) durchläuft.

9. Kraftfahrzeug nach Anspruch 8, **dadurch gekennzeichnet, dass** der untere Teilraum (13) mit einer verschließbaren Einlassklappe (27) versehen ist.

10. Kraftfahrzeug nach Anspruch 7, **dadurch gekennzeichnet, dass** der Kühlluftstrom auf dem durch das Gebläse (19) führenden Weg das Gehäuse (11) in Richtung vom unteren (13) zum oberen (14) Teilraum durchläuft.

11. Kraftfahrzeug nach Anspruch 9, **dadurch gekennzeichnet, dass** wenigstens ein Ventil (21) zwischen dem oberen Teilraum (14) und der Umgebung des Gehäuses (1) zum Ablassen eines Überdrucks aus dem oberen Teilraum (14) unter Umgehung des Gebläses (19) vorgesehen ist.

12. Kraftfahrzeug nach Anspruch 10, **dadurch gekennzeichnet, dass** ein Strömungsweg für durch das Ventil (21) hindurchgetretene Luft am Fuß einer Windschutzscheibe (9) des Fahrzeugs ins Freie mündet.

13. Kraftfahrzeug nach einem der vorhergehenden Ansprüche, **dadurch gekennzeichnet, dass** ein Kühler (22) für eine Fahrzeugklimaanlage und/oder ein Ladeluftkühler (23) für einen Lader vor dem Motor (10) angeordnet sind.

14. Kraftfahrzeug nach Anspruch 13, **dadurch gekennzeichnet, dass** der Kühler (22) der Klimaanlage und/oder der Ladeluftkühler (23) oberhalb oder unterhalb eines Verformungsbereichs eines vorderen Stoßfängerträgers (24) angeordnet ist.

## Claims

1. A motor vehicle with an engine (10) and a radiator (12) for cooling the engine (10) which are housed in a front-side engine compartment which is upwardly delimited by a hood (1), and with a fan (19) for driving a cooling air stream through a housing (11) receiving the radiator (12), in which the cooling air stream can be switched over between a path leading through the fan (19) and an evading path, **characterized in that** the radiator (12), which has a substantially plate-shaped external shape, is aligned approximately parallel to the hood (1) and extends at least partly in an intermediate space above the engine (10) and beneath the hood (1).

2. A motor vehicle according to claim 1, **characterized in that** the fins (16) of the radiator (12) are aligned in an oblique manner relative to an upstream or downstream surface of the radiator (12).

3. A motor vehicle according to one of the preceding claims, **characterized in that** the fan (19) is arranged laterally offset against the housing (11) and the engine (10).

4. A motor vehicle according to one of the preceding claims, **characterized in that** the radiator (12) subdivides the interior of the housing (11) into a bottom compartment (13) and an upper compartment (14).

5. A motor vehicle according to one of the preceding claims, **characterized in that** the fan (19) is connected to the bottom compartment (13).

6. A motor vehicle according to one of the preceding claims, **characterized in that** the fan (19) is connected to the upper compartment (14).

7. A motor vehicle according to one of the preceding claims, **characterized in that** the cooling air stream extends on the evading path from the bottom compartment (13), which is subjected to head wind when the vehicle is in motion, to the upper compartment (14).

8. A motor vehicle according to claim 7, **characterized in that** the cooling air stream passes through the housing (11) in the direction from the upper to the bottom compartment (13) on the path leading through the fan (19).

9. A motor vehicle according to claim 8, **characterized in that** the bottom compartment (13) is provided with a closable inlet flap (27).

10. A motor vehicle according to claim 7, **characterized in that** the cooling air stream passes through the housing (11) in the direction from the bottom compartment (13) to the upper compartment (14) on the path leading through the fan (19).

11. A motor vehicle according to claim 9, **characterized in that** at least one valve (21) is provided between the upper compartment (14) and the surroundings of the housing (1) for discharging an excess pressure from the upper compartment (14) by evading the fan (19).

12. A motor vehicle according to claim 10, **characterized in that** a flow path for air passed through the valve (21) opens into the atmosphere at the base of a windshield (9) of the vehicle.

13. A motor vehicle according to one of the preceding claims, **characterized in that** a radiator (22) for a vehicle air-conditioning system and/or a charge-air cooler (23) for a supercharger are arranged before the engine (10).

14. A motor vehicle according to claim 13, **characterized in that** the radiator (22) of the air-conditioning system and/or the charge-air cooler (23) is arranged above or beneath a deformation area of a front bumper bracket (24).

## Revendications

1. Véhicule à moteur avec un moteur (10) et un radiateur (12) destiné à refroidir le moteur (10), qui sont contenus dans un compartiment moteur situé à l'avant et délimité par un capot (1), et avec une soufflante (19) destinée à entraîner un flux d'air de refroidissement à travers un carter (11) contenant le radiateur (12), le flux d'air de refroidissement pouvant être commuté entre un trajet passant par la soufflante (19) et un trajet d'évitement, **caractérisé en ce que** le radiateur (12) ayant une forme extérieure sensiblement en forme de plaque est approximativement parallèle au capot (1) et s'étend au moins en partie dans un espace intermédiaire situé au-dessus du moteur (10) et en dessous du capot (1).

2. Véhicule à moteur selon la revendication 1, **caractérisé en ce que** des lamelles (16) du radiateur (12) sont orientées en oblique par rapport à une surface du radiateur (12) dirigée vers l'amont ou vers l'aval.

3. Véhicule à moteur selon l'une des revendications précédentes, **caractérisé en ce que** la soufflante (19) est décalée latéralement vers le carter (11) et le moteur (10).

4. Véhicule à moteur selon l'une des revendications précédentes, **caractérisé en ce que** le radiateur (12) partage l'intérieur du carter (11) en un volume partiel inférieur (13) et un volume partiel supérieur (14).

5. Véhicule à moteur selon l'une des revendications précédentes, **caractérisé en ce que** la soufflante (19) est raccordée au volume partiel inférieur (13).

6. Véhicule à moteur selon l'une des revendications précédentes, **caractérisé en ce que** la soufflante (19) est raccordée au volume partiel supérieur (14).

7. Véhicule à moteur selon l'une des revendications précédentes, **caractérisé en ce que** le flux d'air de refroidissement passe, sur le trajet d'évitement, du volume partiel inférieur (13) exposé au vent de la course lorsque le véhicule est en mouvement au volume partiel supérieur (14).

8. Véhicule à moteur selon la revendication 7, **caractérisé en ce que** le flux d'air de refroidissement traverse le carter (11), sur le trajet passant à travers la soufflante (19), dans le sens allant du volume partiel supérieur au volume partiel inférieur (13).

9. Véhicule à moteur selon la revendication 8, **caractérisé en ce que** le volume partiel inférieur (13) est muni d'un volet d'entrée (27) refermable.

10. Véhicule à moteur selon la revendication 7, **caractérisé en ce que** le flux d'air de refroidissement traverse le carter (11), sur le trajet passant à travers la soufflante (19), dans le sens allant du volume partiel inférieur (13) au volume partiel supérieur (14).

11. Véhicule à moteur selon la revendication 9, **caractérisé en ce qu'**il est prévu au moins une soupape (21) entre le volume partiel supérieur (14) et l'environnement du carter (1) pour évacuer une surpression hors du volume partiel supérieur (14) en contournant la soufflante (19).

12. Véhicule à moteur selon la revendication 10, **caractérisé en ce qu'**un trajet d'écoulement de l'air traversant la soupape (21) débouche à l'air libre à la base d'un pare-brise (9) du véhicule.

13. Véhicule à moteur selon l'une des revendications précédentes, **caractérisé en ce qu'**un radiateur (22) pour une installation de climatisation du véhicule et/ou un refroidisseur d'air de suralimentation (23) pour un turbocompresseur sont disposés avant le moteur (10).

14. Véhicule à moteur selon la revendication 13, **caractérisé en ce que** le radiateur (22) de l'installation de climatisation et/ou le refroidisseur d'air de suralimentation (23) sont disposés au-dessus ou en dessous d'une zone déformable d'un support de pare-chocs avant (24).
